Europäisches Patentamt

European Patent Office

Office européen des brevets

(19)

(11) Veröffentlichungsnummer: **0 296 147 B1**

(12) # EUROPÄISCHE PATENTSCHRIFT

(45) Veröffentlichungstag der Patentschrift:
24.04.91 Patentblatt 91/17

(51) Int. Cl.$^5$: **C23G 1/36**, C01B 21/46,
C01B 7/19

(21) Anmeldenummer: **88890140.2**

(22) Anmeldetag: **09.06.88**

(54) **Verfahren zur Gewinnung bzw. Rückgewinnung von Säuren aus metallhaltigen Lösungen dieser Säuren.**

(30) Priorität: **16.06.87 AT 1534/87**

(43) Veröffentlichungstag der Anmeldung:
**21.12.88 Patentblatt 88/51**

(45) Bekanntmachung des Hinweises auf die
Patenterteilung:
**24.04.91 Patentblatt 91/17**

(84) Benannte Vertragsstaaten:
**BE DE ES FR GB IT SE**

(56) Entgegenhaltungen:
**AT-B- 376 632
GB-A- 2 036 573**

(73) Patentinhaber: **MASCHINENFABRIK
ANDRITZ ACTIENGESELLSCHAFT
Statteggerstrasse 18
A-8045 Graz (AT)**

(72) Erfinder: **Karner, Wilhelm, Dr.
Freundgasse 10-12/15
A-1040 Wien (AT)**
Erfinder: **Wurmbauer, Dieter, Dipl.-Ing.
Kielmannseggasse 30
A-2340 Mödling (AT)**
Erfinder: **Krivanec, Heinz, Dr.
Geylinggasse 11
A-1130 Wien (AT)**
Erfinder: **Horn, Juanito
Obere Amtshausgasse 10-12/17
A-1050 Wien (AT)**

(74) Vertreter: **Köhler-Pavlik, Johann, Dipl.-Ing.
Margaretenplatz 5
A-1050 Wien (AT)**

## Beschreibung

Die Erfindung betrifft ein Verfahren zur Gewinnung bzw. Rückgewinnung von Säuren aus Lösungen, insbesondere Metallsalze enthaltenden Lösungen, dieser Säuren durch Sprührösten der Lösungen und anschließende Absorption und/oder Kondensation der dabei gebildeten Gase, wobei die entstehenden Feststoffe abgezogen werden.

Insbesondere ist die Erfindung auf ein Verfahren und eine Vorrichtung zur Gewinnung bzw. Rückgewinnung von Salpetersäure oder eines Salpeter-Flußsäure-Gemisches aus deren Lösungen, insbesondere aus Kationen, wie Fe, Cr, Ni, Ti, Zr, Al enthaltenden Lösungen ausgerichtet. Solche Lösungen fallen bei der Oberflächenbehandlung (Beizen, Ätzen, chemischen Fräsen) von Stählen, rostfreien Stählen (Chrom- und Chrom-Nickelstähle) Sonderlegierungen (z.B. Nickelbasislegierungen) und Sondermetallen (z.B. Titan, Zirkon, Tantal) sowie beim Auflösen dieser Metalle oder ihrer Verbindungen im Zuge von metallurgischen Prozessen an. Dementsprechend enthalten diese Lösungen die Ionen der oben erwähnten Metalle sowie anderer in geringerer Menge enthaltender Legierungselemente oder Verunreinigungen. Diese Lösungen müssen bei Erreichen eines bestimmten Metallgehaltes, der – abhängig von der gebeizten Legierung – von 20 bis 60 g/l gelöstes Metall beträgt, verworfen werden. Üblicherweise werden solche Lösungen durch Neutralisieren entsorgt. Dies stellt durch die großen anfallenden Schlammengen sowie durch die Nitratbelastung des Abwassers ein nicht unbeträchtliches Umweltproblem dar. Überdies resultieren für den Betrieb auch ein hoher Aufwand für Säurenachkauf sowie für Neutralisationschemikalien.

Daher werden seit einigen Jahren in der Literatur Verfahren beschrieben, die wenigstens eine teilweise Rückführung der erwähnten Chemikalien ermöglichen.

Der Nachteil all dieser Verfahren ist, daß sie meist nur eine bestimmte Abfallösung, meistens eine Lösung von Fe, Cr und Ni in einer Mischung aus Flußsäure und Salpetersäure, wie sie beim Behandeln von rostfreien Stählen anfällt, verarbeiten können. Überdies fallen bei vielen Verfahren die in der Lösung enthaltenen Metalle wiederum als Neutralisationsschlamm an, wodurch das Deponieproblem nicht gelöst wird.

Allgemein lassen sich die erwähnten Verfahren in folgende Gruppen einteilen :

### 1. Destillationsverfahren :

Bei solchen z.B. in der GB-A-2 036 573 beschriebenen Verfahren wird Schwefelsäure zur verbrauchten Beizlösung zugegeben und die flüchtigen Säuren $HNO_3$ und HF abdestilliert. Der Metallgehalt fällt als Mischung von Sulfaten an, die weiterbehandelt werden muß. Ein bestimmtes Verfahren wendet dazu die Fällung des Eisens als Jarosit und die Entfernung des Nickels als Hydroxid an. Neben der umständlichen Prozeßführung – es sind mehrere Eindampf-, Kristallisations- und Filtrationsstufen notwendig- muß auch der Chemikalienverbrauch als Nachteil angeführt werden. Im Falle von titanhältigen Lösungen kann das Verfahren nicht verwendet werden, da die Titansulfate nur schlecht kristallisieren.

### 2. Kristallisationsverfahren :

Bei diesem Verfahren beispielsweise gemäß der AT-B-376 632, wird die Lösung in einem speziellen Verdampfer, der mit elektrischem Strom beheizt wird, eingedampft und dann durch Abkühlen Eisenfluoridkristalle gebildet und die Kristalle abfiltiert. Das Filtrat bildet einen Teil der wiedergewonnenen Säure, der andere Teil wird durch thermische Zersetzung der Fluoridkristalle in einem Drehrohrofen in Form von Flußsäure gewonnen.

Dieses Verfahren besitzt einen guten Rückgewinnungsgrad für Fluß- und Salpetersäure, auch kann durch Abrösten der primär anfallenden $FeF_3$- Kristalle eine reine Flußsäure rückgewonnen werden, nicht jedoch eine reine Salpetersäure. Beim Kristallisationsschritt werden nicht alle in der Lösung enthaltenen Kationen im gleichen Ausmaß abgeschieden, sondern vorzugsweise das Eisen. Dadurch kann es in einem Kreislauf Beize-Regeneration zu einer Aufschaukelung von Nebenelementen (Cr, Ni) kommen. Das Verfahren kann auf gewisse andere Lösungen als Fe/Cr/Ni angewendet werden, z.B. auf Zr-hältige Lösungen, nicht jedoch auf Ti.

### 3. Extraktionsverfahren (z.B. US-A-4 166 098) :

Diese Verfahren beinhalten eine Vielzahl von Prozeßschritten, nämlich :
- Eisenextraktion (mit Diethylhexylphosphat in Paraffin),
- Rückgewinnung des Extraktionsmittels durch Zugabe von $NH_4HF_2$,
- Kristallisation von $(NH_4)_3 FeF_6$,
- Zersetzung des $(NH_4)_3FeF_6$ bei 500°C,
- Kalzinierung des Produktes bei 800°C,
- Säureextraktion (Tributylphosphat in Paraffin),
- Neutralisation der zurückbleibenden Restlösung.

Abgesehen von der komplizierten Prozeßführung besteht bei diesen Verfahren immer die Gefahr einer Abwasserverunreinigung durch die Extraktionsmittel sowie Brandgefahr durch die brennbaren Lösungsmittel. Das Verfahren ist ausdrücklich nur für Fe-Cr-Ni- Lösungen beschrieben, Lösungen, die Ti oder andere Metalle enthalten, können auf diesem Weg nicht behandelt werden.

4. Ionenaustauschverfahren (z.B. US-A-3 385 788, US-A-3 386 914) :

Dabei werden die freien Säuren (nicht aber der an das Metall gebundene Anteil) an einem Austauscherharz sorbiert und dann durch Eluieren mit Wasser zurückgewonnen. Die Metalle fallen in Form einer Metallsalzlösung an, die neutralisiert werden muß. Es handelt sich also tatsächlich nicht um ein echtes Regenerationsverfahren, sondern nur um eine Aufbesserung einer teilweise verbrauchten Lösung. Die zu neutralisierenden Metallanteile sind genauso hoch wie bei bloßer Neutralisation.

5. Dialyseverfahren (z.B. US-A-3 844 927) :

Diese können entweder als reine Diffusionsdialyse oder als Elektrodialyse betrieben werden. Bei der Diffusionsdialyse erfolgt analog zu den Ionenaustauschverfahren nur eine Trennung von freier Säure und Metallsalz, womit auch grundlegend dieselben Probleme resultieren. Bei der Elektrodialyse wird zunächst die gesamte Lösung mit Kalilauge neutralisiert und die resultierende neutrale Lösung von Kaliumnitrat und Kaliumfluorid an speziellen Membranen in Säure und Kalilauge unter Anwendung von elektrischem Strom zerlegt. Die Rückgewinnungsgrade sind gut, jedoch ist der Stromverbrauch hoch und die Membranen sehr empfindlich.

Für die vollständige Rückgewinnung von Salzsäure, wie sie zum Beizen von Kohlenstoffstahl verwendet wird, wird seit Jahren das Sprühröstverfahren angewendet. Dabei wird die verbrauchte Beizlösung in einen Reaktor eingesprüht und dort mit heidin Gasen, die durch einen in den Reaktor hineinragenden Brenner erzeugt werden, in Kontakt gebracht. Dadurch kommt es zu einer vollständigen Zersetzung der Lösung :

$$2 FeCl_2 + 2 H_2O + 1/2 O_2 = Fe_2O_3 + 4 HCl$$

Der Metallgehalt der Lösung fällt als Metalloxid an, das entstehende HCl-Gas wird in Wasser wiederum zu Salzsäure absorbiert. Um die oben beschriebene Zersetzung zu erreichen müssen typischerweise Temperaturen von etwa 500 bis 1000°C im Reaktor erreicht werden.

Dieses und ähnliche Verfahren wurden bisher nur auf die Rückgewinnung von Salzsäure angewendet. Gegen die Anwendung dieses Verfahrens zur Rückgewinnung anderer Säuren (z.B. Flußsäure oder Salpetersäure) bestand ein Vorurteil, da man bei den obengenannten Temperaturen eine starke Zersetzung der Salpetersäure in NO befürchtete, das nur schwierig zu absorbieren ist. Ebenso wurden bei diesen Temperaturen Korrosionsprobleme befürchtet.

Aufgabe der Erfindung ist die Schaffung eines Verfahrens zur Gewinnung bzw. Rückgewinnung von Salpetersäure oder eines Salpeter-Flußsäure-Gemisches aus Lösungen, insbesondere Metallsalze enthaltenden Lösungen dieser Säuren unter Überwindung der bestehenden Vorurteile bei der Anwendung des Sprühröstverfahrens und der Absorption der Abgase für diesen Zweck.

Überraschenderweise zeigte sich aber, daß Lösungen, die Metallionen und Salpetersäure oder ein Salpeter-Flußsäure-Gemisch enthalten, bei wesentlich geringeren Temperaturen zersetzt werden können, als bei den oben erwähnten salzsäurehältigen Lösungen erforderlich ist. Das Verfahren der eingangs erwähnten Art ist erfindungsgemäß dadurch gekennzeichnet, daß zur Gewinnung bzw. Rückgewinnung von Salpetersäure oder eines Salpetersäure-Flußsäure-Gemisches aus deren Lösungen, insbesondere aus Kationen, wie Fe, Cr, Ni, Ti, Zr, Al u.a. enthaltenden Lösungen, diese Lösungen bei einer Temperatur von 200 bis 500°C, vorzugsweise 300 bis 400°C, versprüht und die dabei gebildeten Gase bei einer Temperatur von 0 bis 70°C in einer wässrigen Absorptionslösung absorbiert und/oder kondensiert werden.

In Ausgestaltung der Erfindung ist vorgesehen, daß die Absorption sowie die Kondensation zweistufig erfolgt, wobei in der ersten Stufe die Absorption und Kondensation bei einer Temperatur von 20 bis 70°C, vorzugsweise 50 bis 60°C, und in der zweiten Stufe bei einer Temperatur von 0 bis 40°C, vorzugsweise 20 bis 30°C erfolgt.

In vorteilhafter Weise können die beim Sprührösten entstehenden Gase zum Aufwärmen der Lösung verwendet werden.

Zum Unterschied von den weiter oben beschriebenen Verfahren, die zur Rückgewinnung von Flußsäure und Salpetersäure entwickelt wurden, können mit dem in folgenden beschriebenen neuen Verfahren Lösungen beliebiger Zusammensetzung, also Lösungen, die beliebige Kombinationen der Kationen (Fe, Cr, Ni, Ti, Zr, Al) sowie Lösungen, die entweder nur Flußsäure oder nur Salpetersäure oder eine Kombination dieser Säuren enthalten, behandelt werden.

Der Metallgehalt der Lösungen fällt in Form von trockenen Metalloxiden oder Metallsalzen an, die als solche wiederverwendet werden können oder durch weitere Verfahrensschritte zu noch höherwertigen Produkten (Metallpulver) verarbeitet oder aber problemlos deponiert werden können.

Im Reaktor treten bei der thermischen Zersetzung folgende chemische und physikalische Reaktionen auf :

1. $H_2O(l) = H_2O(g)$ ; Wasserverdampfung
2. $HNO_3(aq) = HNO_3(g)$ ; Salpetersäureverdampfung
3. $HF(aq) = HF(g)$ ; Flußsäureverdampfung
4. $2HNO_3(g) = NO_2(g) + NO(g) + H_2O(g) + O_2(g)$ ; $HNO_3$-Zersetzung
4a : $4HNO_3(g) = 3NO_2(g) + NO(g) + 2H_2O(g) +$

1.5 $O_2$(g) ; $HNO_3$-Zersetzung

5. $2NO_2$(g) = 2 NO(g) + $O_2$(g) ; $NO_2$-Zersetzung

6. $MeF_2$(aq) + $H_2O$(g) = MeO(s) + 2HF(g) ; Fluoridzersetzung

7. $Me(NO_3)_2$ + $H_2O$(g) = MeO(s) + $2HNO_3$(g) ; Nitratzersetzung

Die Reaktionen 6 und 7 sind nur als Beispiel (für ein zweiwertiges Metallkation) zu werten, bei anderswertigen Metallen sowie beim Auftreten von geladenen oder sauerstoffhältigen Komplexen sind sie dementsprechend zu formulieren.

Die nach 6 und 7 gebildeten Metalloxide sammeln sich zum größten Teil am Boden des Reaktors und werden von dort mit einer Austragungsvorrichtung kontinuierlich entfernt. Zum Teil werden sie mit dem Abgasstrom mitgeführt und in nachfolgenden Staubabscheidern entfernt. Der Abgasstrom wird einer Absorptions- bzw. Kondensationsanlage zugeführt. Für den Fall daß die aufgegebene Lösung als Säurekomponente nur HF oder z.B. ein Gemisch aus HF und HCl enthält, kann die Absorptions-Kondensationsanlage aus nur einer Kolonne bestehen. Enthält die Lösung $HNO_3$, so müssen mindestens zwei Kolonnen verwendet werden. Die Kolonnen werden mit umlaufender Absorptionslösung beaufschlagt, die in Wärmetauschern auf eine bestimmte Temperatur gekühlt wird. Durch die Wahl der Absorptions- bzw. Kondensationstemperatur kann die Konzentration der ablaufenden Säure beeinflußt werden, wie später erläutert wird.

Die Erfindung wird nachfolgend anhand der Zeichnung beschrieben.

Es zeigen

Fig. 1 ein Blockschema einer erfindungsgemäßen Anlage zur Säurerückgewinnung,

Fig. 2 ein Detail des Blockschemas nach Fig. 1, und

Fig. 3 bis 5 Diagramme zur Erläuterung der Erfindung.

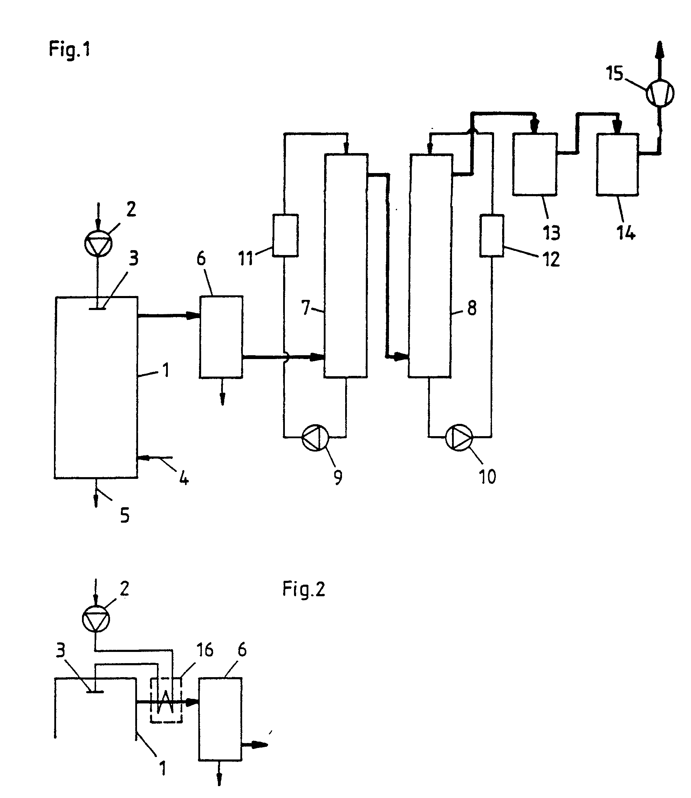

In Fig. 1 bezeichnet 1 einen Reaktor, dem mit einer Dosierpumpe 2 die aufzuarbeitende metallhaltige Lösung über eine Einstoffdüse 3 aufgegeben wird. Die Beheizung des Reaktors 1 erfolgt beispielsweise mit Hilfe eines in der Nähe des Reaktorbodens angebrachten Acetylen-Sauerstoffbrenners 4. Am Boden des Reaktors 1 ist eine Austragsvorrichtung 5 zur kontinuierlichen Austragung der entstehenden Feststoffe vorgesehen. Vom Kopf des Reaktors 1 werden die heißen Abgase zu einem Staubabscheider 6 geleitet, in welchem die restlichen Feststoffe abgeschieden werden. Anschließend gelangen die Abgase zu einer Absorptions-Kondensationslage, die beispielsweise aus hintereinandergeschalteten ersten und zweiten Kolonnen 7, 8 besteht. Die Absorptionsflüssigkeit (Wasser) wird vom Boden jeder Kolonne 7, 8 mit je einer Pumpe 9, 10 abgesaugt und über je einen Wärmetauscher 11, 12 zum Kopf jeder Kolonne 7, 8 zurückgeleitet. Die Wärmetauscher 11, 12 sind beispielsweise wassergekühlt. Schließlich werden die aus der zweiten Kolonne 8 austretenden Abgase noch durch zwei hintereinandergeschaltete Naßwäscher 13,14 geleitet und aus dem zweiten Naßwäscher 14 mit einem Gebläse 15 abgesaugt.

Bei der in Fig. 2 dargestellten Variante wird die aufzuarbeitende Lösung in einem Wärmetauscher 16 durch die aus dem Reaktor 1 austretenden heißen Abgase vorgewärmt, wodurch Energie eingespart werden kann.

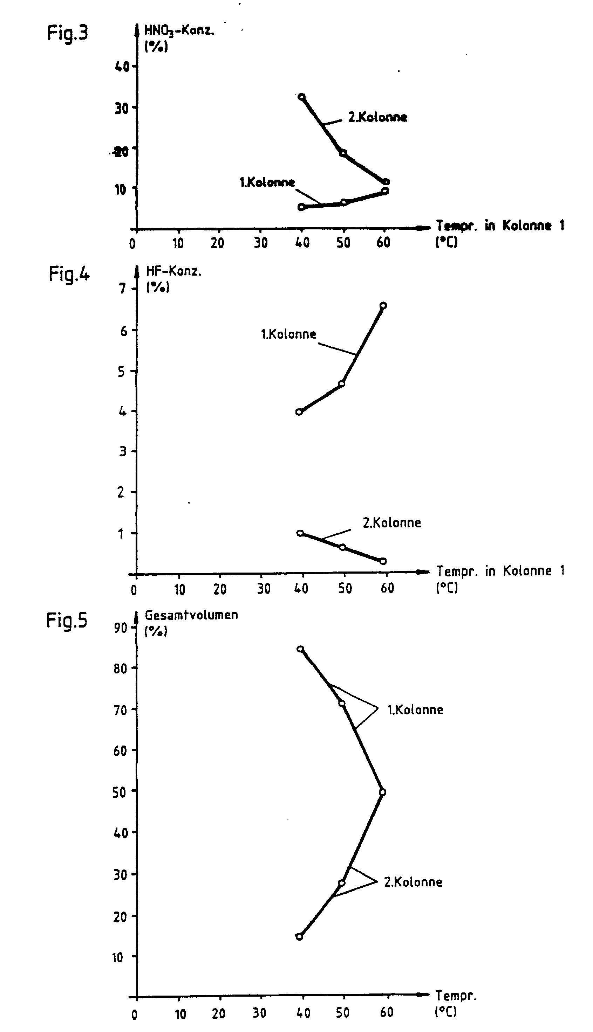

Wie erwähnt, kann durch die Wahl der Absorptions- bzw. Kondensationstemperatur die Säurekonzentration in den ersten und zweiten Kolonnen 7, 8 beeinflußt werden. In den Diagrammen nach Fig. 3 und 5 wird gezeigt, welche Variationsmöglichkeit besteht, wenn z.B. die zweite Kolonne 8 konstant auf 20°C gehalten wird, während die Temperatur in der ersten Kolonne 7 von 40°C bis 60°C variiert wird. Es zeigt sich, daß Betriebsbedingungen möglich sind, bei denen in der ersten Kolonne 7 ein Gemisch von Flußsäure und Salpetersäure anfällt, während in der zweiten Kolonne 8 eine Salpetersäure mit einem nur sehr geringen HF-Anteil entsteht. Dies ist im Zusammenhang mit der Oberflächenbehandlung von Metallen besonders wichtig, da gewisse Beizvorgänge mit einem Flußsäure/Salpetersäure-Gemisch, andere mit reiner Salpetersäure durchgeführt werden.

Fig. 3 zeigt den Zusammenhang zwischen Gesamtvolumen der durchgehenden Lösung und der Temperatur. Weiters zeigt sich, daß die anfallende Flußsäure zum überwiegenden Teil im Ablauf der ersten Kolonne 7 (95%) zu eimem wesentlich geringeren Teil im Ablauf der zweiten Kolonne 8 (4%) und zu einem sehr kleinen Teil im Oxid enthalten ist (Fluoridgehalt des Oxids : 0,2 bis 0,02%).

Die Salpetersäure muß durch Absorption der nitrosen Gase wiedergewonnen werden. Dabei wird zunächst nur der als $NO_2$ vorliegende Anteil nach folgender Reaktion wieder in Salpetersäure umgewandelt :

8. $3NO_2$(g) + $H_2O$(1) = $2HNO_3$(aq) + NO(g) ; Absorption

Das im Gasgemisch primär vorhandene NO sowie der durch die Absorptionsreaktion 8 entstehende NO-Anteil müssen um eine weitere Absorption zu ermöglichen nach folgender Reaktion oxidiert werden :

9. 2NO(g) + $O_2$(g) = $2NO_2$(g) ; Oxidation

Die Reaktionen 8 und 9 sind in der Literatur vielfach beschrieben, sie bilden die Grundlage der Salpetersäureezeugung und sind somit Stand der Technik.

Es zeigt sich, daß die bei der Zersetzung der Metallösung im Reaktor anfallenden Abgase bezüglich des $NO_2$/NO-Verhältnisses eine Zusammensetzung aufweisen, die eine Rückgewinnung von ca. 33% der ursprünglich eingesetzten Salpetersäure in der ersten Kolonne ermöglicht. Das entspricht einem Oxidationsgrad der Abgase von 50% entsprechend einer Zersetzungsreaktion (4).

Durch einen zwischen die erste Kolonne 7 und die zweite Kolonne 8 gesetzten Oxidationsturm (nicht dargestellt), der zur Verlängerung der Verweilzeit führt, wird ein ausreichender Oxidationsgrad erreicht, um in der zweiten Kolonne 8 wiederum 40% der eingesetzten Salpetersäure zu absorbieren. Zusätzlich kann durch Zugabe eines Oxidationsmittels wie Wasserstoffperoxid eine Erhöhung der Salpetersäureausbeute nach Reaktion 10 erzielt werden. Die Zudosierung kann entweder in der ersten Kolonne 7 oder in der zweiten Kolonne 8 vorgenommen werden, oder aber auch in einem separaten Wäscher. Schließlich ist auch noch eine Kombination dieser Varianten möglich.

Es folgt die Reaktion :

10. $NO + H_2O_2 = NO_2 + H_2O$

Anschließen werden die Ergebnisse von praktischen

Ausführungsbeispielen der Erfindung beschrieben.

Beispiel 1 :

Die beim Abbeizen von rostfreiem Stahl mit Salpetersäure/Flußsäure anfallende Lösung. In den Reaktor wurden während 5,5 Stunden insgesamt 16,36 l einer Lösung eingesprüht, die folgende Zusammensetzung aufwies :

$HNO_3$............318,0 g/l

$HF$................35,8 g/l

$Fe$................36,3 g/l

$Cr$................19,8 g/l

$Ni$................25,2 g/l

Die Aufgabe erfolgte mit der Dosierpumpe 2 über die Einstoffdüse 3. Die Beheizung des Reaktors 1 erfolgte mit Hilfe des in der Nähe des Reaktorbodens angebrachten Acetylen-Sauerstoffbrenners 4. Dabei betrug die Temperatur über der Brennerebene 390 bis 470°C, im Abgas 140 bis 160°C. Die gesamte Anlage wurde mit dem Gebläse 14 abgesaugt, wobei die Absaugmenge 12,5 m³/h betrug. Die Abgase wurden zunächst durch den Staubabscheider 5 und dann durch die zwei hintereinandergeschalteten Kolonnen 7 und 8 geleitet, die mit Pallringen gefüllt waren. Mit Hilfe der Umwälzpumpen 9 und 10 wurden die Kolonnen 7 und 8 mit Absorptionslösung beaufschlagt. Dabei konnte die Temperatur der umlaufenden Lösung mit Hilfe der Wärmetauscher 11 und 12 auf einer bestimmten Temperatur gehalten werden. Die Temperatur betrug 50°C in der ersten Kolonne 7 und 22°C in der zweiten Kolonne 8. Die Absorptionslösung war zu Versuchsbeginn Wasser, mit fortschreitender Versuchsdauer stieg der Säuregehalt der Lösung. Schließlich wurde das Gas noch durch die zwei hintereinander angeordneten Naßwäscher 13 und 14 geleitet. Bei Ende des Versuchs wurden Proben aus den Kolonnen 7,8 und den Naßwäscher 13,14 entnommen und auf $HNO_3$ und $HF$ analysiert. Während des Versuchsbetriebs wurde der NOx- und der HF-Gehalt des Abgases mit Drägerröhrchen bestimmt. Aus den Analyseergebnissen und den bekannten Volumina der einzelnen Apparate konnte eine Mengenbilanz aufgestellt werden. Weiters wurde das entstandene Oxid aus dem Reaktor 1 und dem Staubabscheider 6 gesammelt, ausgewogen und analysiert. Von den insgesamt aufgegebenen Mengen an $HNO_3$ befanden sich bei Versuchsende :

33,0% in der ersten Kolonne 7 bzw. im Überlauf der ersten Kolonne 7

43,2% in der zweiten Kolonne 8 bzw. im Überlauf der zweiten Kolonne 8

7,2% im ersten Naßwäscher 13

3,0% im zweiten Naßwäscher 14

11,5% im Abgas

0% im Oxid

97,9% Summe

Von der insgesamt aufgegebenen Menge an HF befanden sich bei Versuchsende :

86,0% in der ersten Kolonne 7 bzw. im Überlauf der ersten Kolonne 7

9,6% in der zweiten Kolonne 8 bzw. im Überlauf der zweiten Kolonne 8

1,9% im ersten Naßwäscher 13

0% in zweiten Naßwäscher 14

0% im Abgas

1,3% im Oxid

98,8% Summe

Die Abweichungen der Summen von 100% ergeben sich aus den Analyseungenauigkeiten.

Beispiel 2 :

Die beim Abbeizen von rostfreiem Stahl mit Salpetersäure und Ammoniumnitrat anfallende Lösung. Der Versuch wurde mit der gleichen Lösung durchgeführt wie beim Beispiel 1, jedoch wurde der Lösung Ammoniumnitrat zugefügt, sodaß sich ein Gehalt von 15 g/l $NH_4NO_3$ ergab. Wie beim Beispiel 1 beschrieben, wurde eine Gesamtbilanz über den Versuch erstellt. Dabei zeigte sich, daß die Zugabe von $NH_4NO_3$ zu keiner Erhöhung der Nitratwerte in der wiedergewonnenen Säure führt und auch kein Ammonium nachgewiesen werden konnte. Dies berechtigt zur Annahme, daß das Ammoniumnitrat nach einer der untenstehenden Reaktionen völlig zersetzt wird :

11a. $NH_4NO_3 = N_2O + 2H_2O$

11b. $NH_4NO_3 = N_2 + 2H_2O + 1/2 O_2$

Diese Tatsache ist deswegen von Bedeutung, weil Beizlösungen manchmal mit Harnstoff $((NH_2)_2CO)$ versetzt werden, um die unerwünschte Bildung von Stickoxiden bei der Metallauflösung herabzusetzen. Dabei kommt es teilweise zur Bildung von Ammoniumnitrat, welches schließlich über die Spülwässer oder über die Neutralisation der Beizsäure ins Abwasser gelangt und dort zu unzulässig hohen Ammoniumkonzentrationen führen kann. Der oben beschriebene Versuch zeigt, daß Ammoniumnitrat mit Hilfe dieses Verfahrens aus dem Kreislauf entfernt und zerstört werden kann.

Beispiel 3 :

Die beim Abbeizen von Reintitan mit Salpetersäure und Flußsäure anfallende Lösung. Analog wie beim Beispiel 1 beschrieben, wurde während 9 Stunden eine Gesamtmenge von 12,29 l einer Lösung mit folgender Zusammensetzung aufgegeben :

$$Ti\dots\dots\dots\dots\dots 32,0 \text{ g/l}$$
$$HNO_3\dots\dots\dots\dots 132,4 \text{ g/l}$$
$$HF\dots\dots\dots\dots\dots 34,8 \text{ g/l}$$
$$H_2SO_4\dots\dots\dots\dots 5,0 \text{ g/l}$$

Die Temperatur betrug 390°C in der Brennerebene, 45°C in der ersten Kolonne 7 und 35°C in der zweiten Kolonne 8. Nach Beendigung des Versuches wurde wie beim Beispiel 1 analysiert. Von der insgesamt aufgegebenen Menge $HNO_3$ befanden sich :

33,0% in der ersten Kolonne 7 bzw. im Überlauf der ersten Kolonne 7
41,4% in der zweiten Kolonne 8 bzw. im Überlauf der zweiten Kolonne 8
7,0% im ersten Naßwäscher 13
3,0% im zweiten Naßwäscher 14
14,5% im Abgas
0% im Oxid
98,9% Summe
Von der insgesamt aufgegebenen Menge an HF befanden sich bei Versuchsende :
98,5% in der ersten Kolonne 7 bzw. im Überlauf der ersten Kolonne 7
2,9% in der zweiten Kolonne 8 bzw. im Überlauf der zweiten Kolonne 8
0% im ersten Naßwäscher 13
0% im zweiten Naßwäscher 14
0% im Abgas
0% im Oxid
101,5% Summe
Von der insgesamt aufgegebenen Menge an $H_2SO_4$ waren bei Versuchsende :
58,0% in der ersten Kolonne 7 bzw. im Überlauf der ersten Kolonne 7
42,0% im Oxid
100,0% Summe

Beispiel 4 :

Die beim Abbeizen von Reintitan mit Salpetersäure und Flußsäure anfallende Lösung plus Peroxidzugabe. Der Versuch wurde mit der gleichen lösung durchgeführt wie beim Beispiel 3, jedoch wurde in die zweite Kolonne 8 eine Lösung von Wasserstoffperoxid zugegeben. Die Bilanz ergab eine erhöhte Salpetersäureausbeute in dieser Kolonne und eine Verminderung des NOx-Gehaltes im Abgas :
Von der insgesamt eingesetzten Menge an $HNO_3$ befanden sich :
33,2% in der ersten Kolonne 7 bzw. im Überlauf der ersten Kolonne 7
46,5% in der zweiten Kolonne 8 bzw. im Überlauf der zweiten Kolonne 8
8,2% im ersten Naßwäscher 13
3,0% im zweiten Naßwäscher 14
9,5% im Abgas
0% im Oxid
100,4% Summe
$H_2O_2$ wurde im stöchiometrischen Verhältnis zu NO (entsprechend Reaktion 10) zugegeben, wobei das im Abgas befindliche NOx als 100% NO angenommen wurde.
Wie aus obigen Beispielen ersichtlich ist, können in der metallhaltigen Lösung auch andere Säuren, wie z.B. Schwefelsäure, Salzsäure, Phosphorsäure sowie andere chemische Verbindungen, wie z.B. Ammoniumsalze oder organische Stoffe enthalten sein.

## Ansprüche

1. Verfahren zur Gewinnung bzw. Rückgewinnung von Säuren aus Lösungen, insbesondere Metallsalze enthaltenden Lösungen, dieser Säuren durch Sprühröstung der Lösungen und anschließende Absorption und/oder Kondensation der dabei gebildeten Gase, wobei die entstehenden Feststoffe abgezogen werden, dadurch gekennzeichnet, daß zur Gewinnung bzw. Rückgewinnung von Salpetersäure oder eines Salpeter-Flußsäure-Gemisches aus deren Lösungen, insbesondere aus Kationen, wie Fe, Cr, Ni, Ti, Zr, Al, enthaltenden Lösungen, diese Lösungen bei einer Temperatur von 200 bis 500°C, vorzugsweise 300 bis 400°C, versprüht und die dabei gebildeten Gase bei einer Temperatur von 0 bis 70°C in einer wässrigen Absorptionslösung absorbiert und/oder kondensiert werden.

2. Verfahren nach Anspruch 1, dadurch gekennzeichnet, daß die Absorption sowie die Kondensation zweistufig erfolgt, wobei in der ersten Stufe die Absorption und Kondensation bei einer Temperatur von 20 bis 70°C, vorzugsweise 50 bis 60°C, und in der zweiten Stufe bei einer Temperatur von 0 bis 40°C, vorzugsweise 20 bis 30°C, erfolgt.

3. Verfahren nach Anspruch 1 oder 2, dadurch gekennzeichnet, daß bei der Absorption und Kondensation ein Oxidationsmittel zugegeben wird.

4. Verfahren nach Anspruch 3, dadurch gekennzeichnet, daß als Oxidationsmittel Wasserstoffperoxid verwendet wird.

## Claims

1. A process for the recovery and/or regeneration of acids from solutions of these acids, more particularly solutions containing metal salts, by spray roasting of the solutions followed by the absorption and/or condensation of the gases formed as a result, the solids occurring being drawn off, characterized in that for the recovery and/or regeneration of nitric acid or a mixture of nitric acid and hydrofluoric acid from solutions thereof, more particularly solutions containing cations such as Fe, Cr, Ni, Ti, Zr, Al, said solutions are sprayed at a temperature of 200 to 500°C, preferably 300 to 400°C, the gases formed as a result being absorbed and/or condensed in an aqueous absorption solution at a temperature of 0 to 70°C.

2. A process according to Claim 1, characterized in that absorption and condensation is performed in two stages, adsorption and condensation being performed in the first stage at a temperature of 20 to 70°C, preferably 50 to 60°C, and in the second stage at a temperature of 0 to 40°C, preferably 20 to 30°C.

3. A process according to Claims 1 or 2, characterized in that an oxidizing agent is added during absorption and condensation.

4. A process according to Claim 3, characterized in that the oxidizing agent used is hydrogen peroxide.

## Revendications

1. Procédé d'obtention ou de récupération d'acides à partir de solutions, en particulier de solutions contenant des sels métalliques, de ces acides, par grillage par pulvérisation des solutions et absorption et/ou condensation subséquente des gaz ainsi formés, les matières solides résultantes étant retirées, caractérisé par le fait que, pour l'obtention ou la récupération d'acide nitrique ou d'un mélange acide nitrique-acide fluorhydrique à partir de leurs solutions, en particulier à partir de solutions contenant des cations comme Fe, Cr, Ni, Ti, Zr, Al, ces solutions sont pulvérisées à une température de 200 à 500°C, de préférence, de 300 à 400°C, et les gaz ainsi formés sont absorbés dans une solution aqueuse d'absorption et/ou condensés à une température de 0 à 70°C.

2. Procédé selon la revendication 1, caractérisé par le fait que l'absorption ainsi que la condensation ont lieu en deux étapes, l'absorption et la condensation ayant lieu, dans la première étape, à une température de 20 à 70°C, de préférence, de 50 à 70°C, et, dans la deuxième étape, à une température de 0 à 40°C, de préférence, de 20 à 30°C.

3. Procédé selon la revendication 1 ou 2, caractérisé par le fait qu'un agent oxydant est ajouté lors de l'absorption et de la condensation.

4. Procédé selon la revendication 3, caractérisé par le fait que le peroxyde d'hydrogène est utilisé comme agent oxydant.

Fig.1

Fig.2

Fig.3

HNO₃-Konz. (%)

2.Kolonne

1.Kolonne

Tempr. in Kolonne 1 (°C)

Fig.4

HF-Konz. (%)

1.Kolonne

2.Kolonne

Tempr. in Kolonne 1 (°C)

Fig.5

Gesamtvolumen (%)

1.Kolonne

2.Kolonne

Tempr. (°C)